# EUROPEAN PATENT SPECIFICATION

(11) **EP 2 744 115 B1**
(45) Date of publication and mention of the grant of the patent: **29.07.2020**
(21) Application number: 12822365.8
(22) Date of filing: 07.08.2012
(51) Int. Cl.: H04L 1/20, H04B 1/16, H04B 17/00

(54) **WIRELESS COMMUNICATION DEVICE**
DRAHTLOSE KOMMUNIKATIONSVORRICHTUNG
DISPOSITIF DE COMMUNICATION SANS FIL

(30) Priority: 09.08.2011 JP 2011173511
(43) Date of publication of application: 18.06.2014
(73) Proprietor: Panasonic Corporation, Kadoma-shi, Osaka 571-8501 (JP)
(72) Inventor: TANAKA, Takao, 2-1-61 Shiromi Chuo-ku, Osaka 540-6207 (JP); MATSUMOTO, Takayuki, 2-1-61 Shiromi Chuo-ku, Osaka 540-6207 (JP)
(74) Representative: Grünecker Patent- und Rechtsanwälte PartG mbB
(86) International application number: PCT/JP2012/005001
(87) International publication number: WO 2013/021620

(56) References cited:
- WO-A1-95/28041
- JP-A- 2 060 238
- JP-A- 8 129 688
- JP-A- 2004 015 368
- JP-A- 2006 129 102
- JP-A- 2008 079 057
- JP-A- 2008 148 018
- JP-A- 2008 270 978
- JP-A- 2010 263 511
- US-A1- 2005 220 230
- US-A1- 2009 003 299
- KREDO ET AL: "Medium access control in wireless sensor networks", COMPUTER NETW, ELSEVIER, AMSTERDAM, NL, vol. 51, no. 4, 28 December 2006 (2006-12-28), pages 961-994, XP005817607, ISSN: 1389-1286, DOI: 10.1016/J.COMNET.2006.06.012
- WEI YE ET AL: "An energy-efficient MAC protocol for wireless sensor networks", PROCEEDINGS IEEE INFOCOM 2002. THE CONFERENCE ON COMPUTER COMMUNICATIONS. 21ST. ANNUAL JOINT CONFERENCE OF THE IEEE COMPUTER AND COMMUNICATIONS SOCIETIES. NEW YORK, NY, JUNE 23 - 27, 2002; [PROCEEDINGS IEEE INFOCOM. THE CONFERENCE ON COMPUTER COMMUNI, vol. 3, 23 June 2002 (2002-06-23), pages 1567-1576, XP010593724, DOI: 10.1109/INFCOM.2002.1019408 ISBN: 978-0-7803-7476-8

## Description

### TECHNICAL FIELD

The present invention relates to wireless communication devices used in wireless communication systems, etc., and specifically to a wireless communication device capable of determining the occurrence of an abnormal situation in carrier sense resulting from a wireless communication environment, for example, caused by noise.

### BACKGROUND ART

Examples of a wireless communication device included in a wireless communication system typically include a wireless master device for collecting data and a wireless slave device for sending data to the wireless master device. Moreover, a wireless repeater for relaying communication between the wireless master device and the wireless slave device is used as needed. Of these devices, the wireless slave device or the wireless repeater enables wireless communication via a specific channel and wireless communication via a sub-channel.

A technique has been proposed which enables, in such a wireless communication device, automatic switching from the main channel to the sub-channel when the main channel is in use. For example, Patent Document 1 describes a wireless communication device configured to perform carrier sense on a main channel. When the signal strength of a received signal in the channel frequency of the main channel is lower than or equal to a threshold value, the wireless communication device determines the main channel to be available. On the other hand, when the strength of the received signal is higher than the threshold value, the wireless communication device determines the main channel to be in use, and automatically switches the channel to a sub-channel.
Non Patent Literature 1 describes a MAC protocol for wireless sensor networks having energy conserving properties.
Non Patent Literature 2 describes medium access control concepts in relation to sensor networks and examine previous wireless medium access control protocols.

### CITATION LIST

### PATENT DOCUMENT

PATENT DOCUMENT 1: Japanese Unexamined Patent Publication No. 2009-290799
NPL1 WEI YE ET AL: "An energy-efficient MAC protocol for wireless sensor networks" describes a wireless device according to the preamble of claim 1.
NPL2 KREDO ET AL: "Medium access control wireless sensor networks", COMPUTER NETW; ELSEVIER; AMSTERDAM; NL; vol. 51, no. 4, 28 December 2006 (2006-12-28), pages 961-994.

### SUMMARY OF THE INVENTION

### TECHNICAL PROBLEM

However, the technique described in Patent Document 1 is not capable of performing appropriate carrier sense under an environment in which noise existing in both the main channel and the sub-channel. In this case, carrier sense is repeated to check communication status, so that electric power of an internal battery is consumed by the carrier sense which is frequently performed, which may shorten a period in which communication is possible (may reduce the life of the battery).

Alternatively, there may be a case where after installation of a wireless communication device, the presence of noise as described above is not noticed until communication is no longer possible due to consumption of power of an internal battery. In this case, the wireless communication device has to be changed, reinstalled, etc., which results in complication of maintenance, an increase in cost, etc.

Here, if it is possible to check the presence of noise in both the main channel and the sub-channel in advance, the installation site of the wireless communication device can be changed to allow appropriate carrier sense.

To check the presence of the noise, a measuring apparatus may be brought to the installation site of the wireless communication device to measure the noise. However, it is laborious to transport the measuring apparatus for measurement every time a wireless communication device is installed. Moreover, it may be difficult to bring the measuring apparatus to an installation site if the installation site is, for example, a top of a telegraph pole. When the installation site is the top of the telegraph pole as in the above example, the problem of measurement accuracy arises even when measurement is performed, for example, on the ground at the foot of the telegraph pole because the ground is apart from the actual installation site.

The present invention was devised to solve the above-discussed problems. It is an objective of the present invention to provide a wireless communication device having a simple configuration capable of highly accurately determining the occurrence of an abnormal situation in carrier sense caused by noise, thereby reducing unnecessary consumption of power of an internal battery, which increases the life of the battery.

### SOLUTION TO THE PROBLEM

According to an aspect of the present invention, a wireless communication device has the configuration defined by claim 1.

With this configuration, the determiner determines whether or not an abnormal situation has occurred in the carrier sense based on whether or not the ratio of the number of times of erroneous carrier sense to the number of carrier sense executions is greater than or equal to the predetermined threshold value. In this way, without using another instrument such as a noise meter, whether or not an abnormal situation has occurred in the carrier sense can be determined with a simple configuration. Whether or not an abnormal situation has occurred in the carrier sense is determined based on the ratio of the number of times of erroneous carrier sense to the number of carrier sense executions. Therefore, when an abnormal situation has occurred, the occurrence of the abnormal situation can be determined early. That is, whether or not an abnormal situation has occurred in the carrier sense can be determined without unnecessarily consuming an internal battery. When an abnormal situation has occurred in the carrier sense, for example, the installation site is changed and/or a source generating noise is eliminated, so that it is possible to reduce the occurrence of an abnormal situation in the carrier sense. Thus, it is possible to reduce unnecessary consumption of the internal battery due to the occurrence of an abnormal situation in the carrier sense, so that the life of the wireless communication device can be increased.

### ADVANTAGES OF THE INVENTION

The wireless communication device according to the present invention has a simple configuration capable of determining the occurrence of an abnormal situation resulting from a wireless communication environment, for example, caused by noise in carrier sense to reduce unnecessary consumption of an internal battery, so that an increase of the life is possible.

### BRIEF DESCRIPTION OF THE DRAWINGS

FIG. 1(a) is a view schematically illustrating an example of a wireless communication system including a wireless communication device according to an embodiment of the present invention. FIG. 1(b) is a flow chart illustrating control of carrier sense by a wireless slave device or a wireless repeater of the wireless communication system.
FIG. 2 is a block diagram illustrating an example configuration of a wireless communication device corresponding to the wireless slave device or the wireless repeater in the wireless communication system of FIG. 1.
FIG. 3 is a flow chart illustrating a control example in which whether or not an abnormal situation has occurred in carrier sense is determined in the wireless communication device of FIG. 2.
FIG. 4 is a flow chart illustrating a control example in which whether or not an abnormal situation has occurred in carrier sense is determined in the wireless communication device of FIG. 2.
FIG. 5 is a flow chart illustrating a control example in which whether or not an abnormal situation has occurred in carrier sense is determined in the wireless communication device of FIG. 2.

### DESCRIPTION OF EMBODIMENTS

Preferable embodiments of the present invention will be described below with reference to the drawings. In the drawings, like reference symbols have been used to designate identical or equivalent elements, and explanation thereof is not repeated.

### [Wireless Communication System and Carrier Sense]

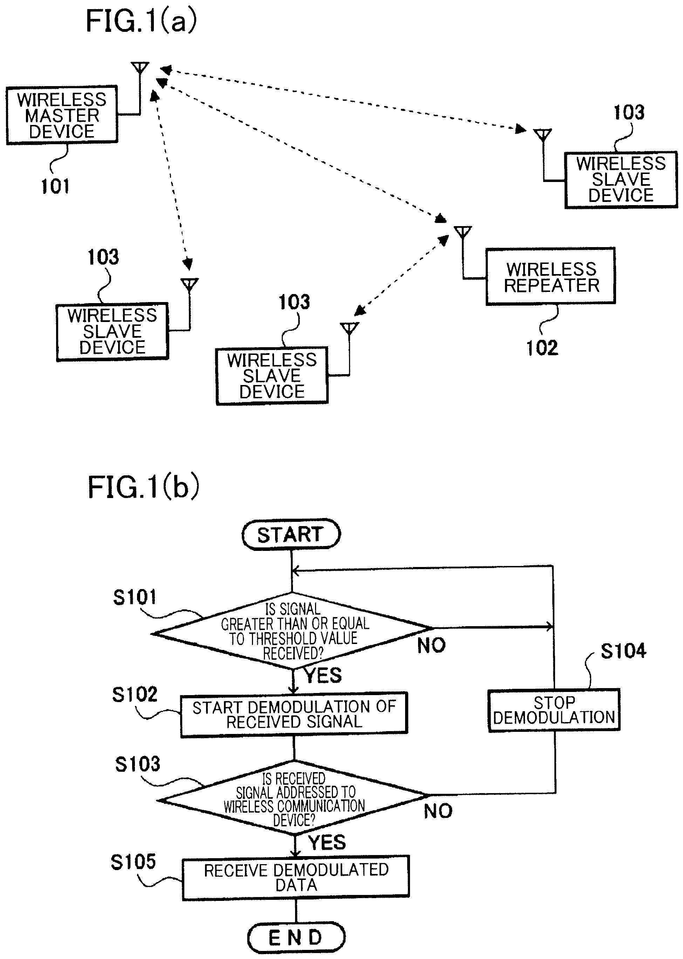

A wireless communication system in which a wireless communication device according to an embodiment of the present invention is used and carrier sense performed by a wireless slave device, etc. included in the wireless communication system will be specifically described with reference to FIGS. 1(a) and 1(b).

As illustrated in FIG. 1(a), the wireless communication system according to the present embodiment includes a wireless master device 101, a wireless repeater 102, and wireless slave devices (wireless terminals) 103. The wireless master device 101 wirelessly communicates with the wireless repeater 102 serving as a wireless communication device and the wireless slave devices 103 serving as wireless communication devices. The wireless master device 101 collects data from the wireless repeater 102 and the wireless slave devices 103 and outputs the collected data to a host computer, etc. (not shown). The wireless repeater 102 relays communication between the wireless master device 101 and each of the wireless slave devices 103. In the present embodiment, each wireless slave device 103 is connected to a gas meter 20 serving as an external device which will be described later. Each wireless device 103 acquires data from the gas meter 20 and sends the acquired data to the wireless master device 101. Specifically, each wireless slave device 103 acquires data which is, for example, the flow rate of a gas in a gas pipe from the gas meter 20 and sends the acquired data to the wireless master device 101. The wireless master device 101, which has received the data from the wireless slave device 103, outputs the data (e.g., the flow rate of the gas) to the host computer, etc. Note that an external device to be connected to the wireless slave device 103 is not limited to the gas meter, and data to be collected is not limited to the flow rate of a gas. For example, the wireless slave device 103 may be connected to a utility meter such as an electricity meter or a water meter as an external device to acquire data such as the amount of use of electricity or water from such a utility meter. Depending on conditions of use, etc. of the wireless communication system, the wireless repeater 102 is not necessarily included in the wireless communication system. For example, when all of the wireless slave devices 103 can directly communicate with the wireless master device 101, it is possible to dispense with the wireless repeater 102.

In a wireless communication system having the configuration described above, the wireless slave device 103 performs carrier sense between the wireless master device 101 and the wireless slave device 103 and between the wireless repeater 102 and the wireless slave device 103. The wireless repeater 102 performs carrier sense between the wireless master device 101 and the wireless repeater 102.

A flow of specific control in executing carrier sense will be described with reference to FIG. 1(b). As illustrated in FIG. 1(b), the wireless slave device 103 determines whether or not a signal greater than or equal to a threshold value is received via a communication channel preset between the wireless master device 101 (or the wireless repeater 102) and the wireless slave device 103 (step S101).

At step S101, when the received signal is less than the threshold value ("NO" at step S101), the wireless slave device 103 repeats reception determination of signals in step S101. On the other hand, when the received signal is greater than or equal to the threshold value ("YES" at step S101), the wireless slave device 103 starts demodulating the received signal (step S102). The wireless slave device 103 determines whether or not the demodulated signal is a signal addressed thereto (step S103).

When the demodulated signal is not a signal addressed to the wireless slave device 103 ("NO" in step S103), the wireless slave device 103 stops demodulating the received signal (step S104), and the flow goes back to the reception determination at step S101. On the other hand, when the demodulated signal is a signal addressed to the wireless slave device 103 ("YES" at step S103), the wireless slave device 103 receives the demodulated data (step S105) and terminates controlling the carrier sense.

As in the present embodiment, in the case where the wireless master device 101 collects data from the gas meter 20 via the wireless slave device 103, the frequency of collection of data from the wireless slave device 103 by the wireless master device 101, that is, the frequency at which the wireless slave device 103 receives a signal addressed thereto ("YES" at step S103) is periodic, for example, once a month. The carrier sense between the wireless slave device 103 and the wireless master device 101 and between the wireless slave device 103 and the wireless repeater 102 (determination at step S101) is periodically performed at a frequency (e.g., several times per minute) higher than, for example, the frequency of the collection of data.

### [Configuration of Wireless Communication Device]

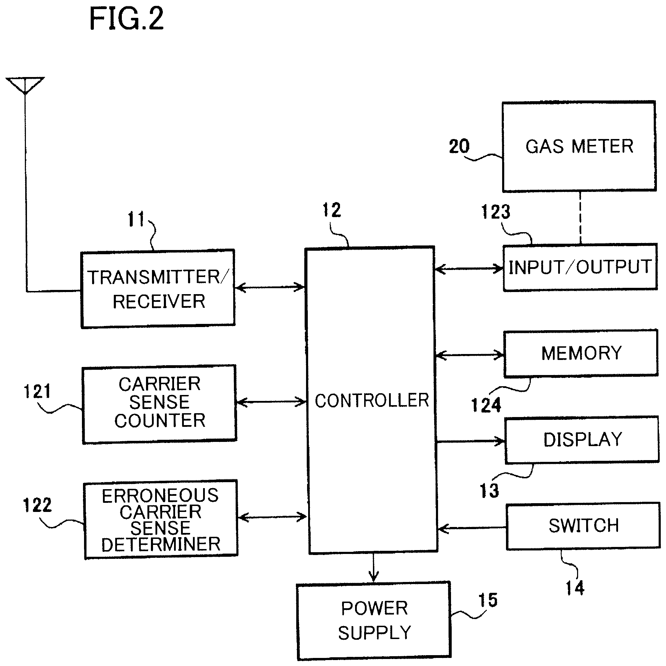

Next, configurations of main components of the wireless communication device according to the present embodiment, that is, the wireless slave device 103 or the wireless repeater 102 performing the carrier sense will be specifically described with reference to FIG. 2. FIG. 2 illustrates an example configuration of the wireless slave device 103 connected to the gas meter 20. Note that the wireless repeater 102 has a configuration similar to that illustrated in FIG. 2, and thus detailed description of the configuration of the wireless repeater 102 is omitted here.

As illustrated in FIG. 2, the wireless communication device (the wireless slave device 103 in this embodiment) according to the present embodiment includes a transmitter/receiver 11, a controller 12, a carrier sense counter 121, erroneous carrier sense determiner 122, an input/output 123, a memory 124, a display 13, a switch section 14, and a power supply 15.

The transmitter/receiver 11 wirelessly communicates with other wireless communication devices such as the wireless master device 101, the wireless repeater 102, etc. The wireless communication includes the carrier sense.

The controller 12 is configured to control the entire wireless communication device, and the controller 12 also controls the wireless communication and the carrier sense of the transmitter/receiver 11. Thus, the carrier sense illustrated in the flow chart of FIG. 1(b) is controlled by the controller 12.

The carrier sense counter 121 serving as a counter counts at least one of the number of times that the carrier sense is executed or the number of times that the carrier sense is erroneous. Specifically, the carrier sense counter 121 counts, as the number of times that the carrier sense is executed, at least one of the number of determinations of whether or not a signal received via the transmitter/receiver 11 is a signal greater than or equal to the threshold value, that is, the number of times that step S101 of FIG. 1(b) is performed (the case where the result of the determination is "YES" and the case where the result of the determination is "NO" are both included) or the number of times that the demodulation of a received signal is started when the received signal is a signal greater than the threshold value (e.g., the number of times that step S102 of FIG. 1(b) is performed). The carrier sense counter 121 counts, as the number of times that the carrier sense is erroneous, the number of determinations that the received signal is not a signal addressed to the wireless slave device 103 as a result of the demodulation in the carrier sense (e.g., the number of "NO" determinations at step S103 of FIG. 1(b)). Hereinafter, in carrier sense, the number of determinations of whether or not a signal received via the transmitter/receiver 11 is a signal greater than or equal to the threshold value is referred to as "the number of carrier sense control executions." When the received signal is a signal greater than or equal to the threshold value, the number of times that the demodulation of the received signal is started is referred to as "the number of starts of demodulation." The number of determinations that the received signal is not a signal addressed to the wireless slave device 103 as a result of the demodulation is referred to as "the number of times of erroneous carrier sense."

When the number of times of erroneous carrier sense or the number of starts of demodulation counted by the carrier sense counter 121 is greater than a preset reference value for determination, the erroneous carrier sense determiner 122 serving as a determiner determines that an abnormal situation has occurred in in the carrier sense. Alternatively, when the ratio of the number of times of erroneous carrier sense to the number of carrier sense control executions or the number of starts of demodulation is greater than a preset value (a reference ratio for determination), the erroneous carrier sense determiner 122 determines that an abnormal state has occurred in the carrier sense.

The input/output 123 is connected to the gas meter 20 or another external device, and receives/outputs data from/to the gas meter 20 or the external device. In the present embodiment, the input/output 123 receives a value of the flow rate of a gas measured by the gas meter 20, or outputs various command signals to the gas meter 20.

The memory 124 is capable of storing various types of data and reading and writing of data from the memory 124 via the controller 12. For example, the memory 124 stores ID data of the wireless master device 101 or the wireless repeater 102, ID data of the wireless slave device 103, the threshold value of a received signal to determine whether or not the carrier sense is to be controlled, the reference value for determination, various programs, etc. in a readable state. Moreover, the memory 124 can store a value of the flow rate of a gas, the value being acquired, for example, from the gas meter 20.

The display 13 is a display device with reduced power consumption, such as an LED lamp, a small-sized liquid crystal panel of a segment type, etc., and is capable of displaying various types of information when controlled by the controller 12.

The switch section 14 serving as an operation section includes a switch configured to turn on/off the power supply of the wireless communication device, a switch configured to turn on/off specific functions of the wireless communication device, etc. In the present embodiment, the switch section 14 is configured as a switch used both to turn on/off the power supply and to turn on/off erroneous carrier sense determination. Thus, the erroneous carrier sense determination is turned on/off simultaneously when the power supply is turned on/off. Note that, for example, when there may be the case where the power supply of the wireless communication device is turned on/off, the wireless communication device is then installed, and thereafter, the erroneous carrier sense determination is turned on/off, the switch section 14 is not used for both turning on/off the power supply and turning on/off the erroneous carrier sense determination. The switch section 14 receives an input relating to an execution mode which will be described later. The power supply 15 has an internal battery.

Note that a specific configuration of the wireless communication device is not limited to the example configuration illustrated in FIG. 2 and described above, but various configurations known in the this field can be suitably used. For example, additionally or alternatively to the display 13, another notification section may be provided. The switch section 14 may be omitted. Specifically, for example, the switch section 14 may be omitted in a configuration in which when an internal battery serving as the power supply 15 is inserted, the power supply of the wireless communication device is automatically turned on, and the erroneous carrier sense determination is automatically started.

### [Control Flow of Carrier Sense]

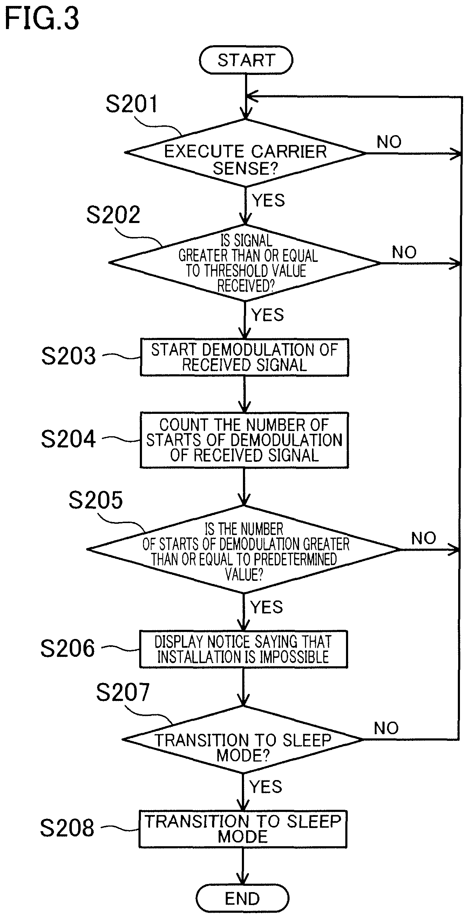

Next, a control flow of carrier sense performed by the wireless communication device will be specifically described with reference to FIGS. 3, 4, and 5.

### -Control Flow (1) of Carrier Sense-

FIG. 3 illustrates a control flow in the case where an abnormal situation in carrier sense is determined based on the number of starts of demodulation described above.

As illustrated in FIG. 3, first, the controller 12 determines whether or not to execute the carrier sense (step S201). When the controller 12 determines not to execute the carrier sense ("NO" at step S201), the process at step S201 is repeated. On the other hand, when the controller 12 determines to execute the carrier sense ("YES" in step S201), the controller 12 determines, similar to step S101 of FIG. 1(b), whether or not a signal greater than or equal to the threshold value is received through the transmitter/receiver 11 via a communication channel preset between the wireless master device 101 (or the wireless repeater 102) and the wireless slave device 103 (step S202). More specifically, for example, when the carrier sense is executed in each predetermined period, step S201 results in "YES" in the predetermined period.

At step S202, when the received signal is less than the threshold value ("NO" at step S202), the flow goes back to the determination at step S201. On the other hand, when the received signal is greater than or equal to the threshold value, similar to step S102 of FIG. 1(b), demodulation of the received signal is started (step S203). The carrier sense counter 121 is controlled by the controller 12 to count (count up) the number of starts of demodulation (step S204).

Next, the erroneous carrier sense determiner 122 is controlled by the controller 12 to determine whether or not the number of starts of demodulation is greater than or equal to a predetermined number of times, that is, the reference value for determination (step S205). When the number of starts of demodulation is less than the reference value for determination ("NO" at step S205), the flow goes back to the determination at step S201. On the other hand, when the number of starts of demodulation is greater than or equal to the reference value for determination ("YES" at step S205), the erroneous carrier sense determiner 122 determines that an abnormal situation has occurred in the carrier sense. In this case, the display 13 is controlled by the controller 12 to display, for example, a notice saying that installation is impossible as alert information (step S206).

Here, the reference value for determination used at step S205 is determined based on, for example, the life of the internal battery of the power supply 15, the number of times that the carrier sense will be executed in a predetermined period, etc. Specifically, for example, where 10-year period of use without changing the internal battery is assumed, the number of times that the carrier sense will be executed for 10 years and the number of executions during the life, i.e., a maximum number of times that the carrier sense can be executed during the life of the battery are approximately concerned, and between the number of times that the carrier sense will be executed and the number of executions during the life, the reference value for determination is determined. For example, a predetermined ratio or a predetermined number of times is added as a margin to the number of times that the carrier sense will be executed, thereby obtaining the reference value for determination.

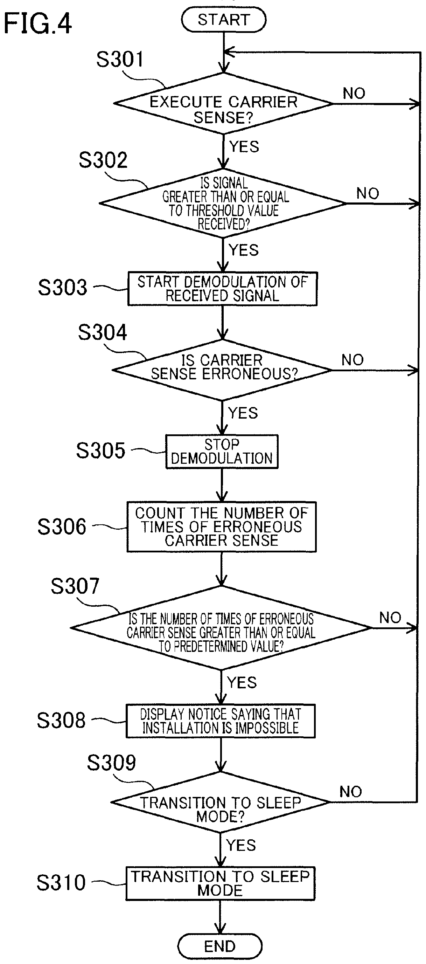

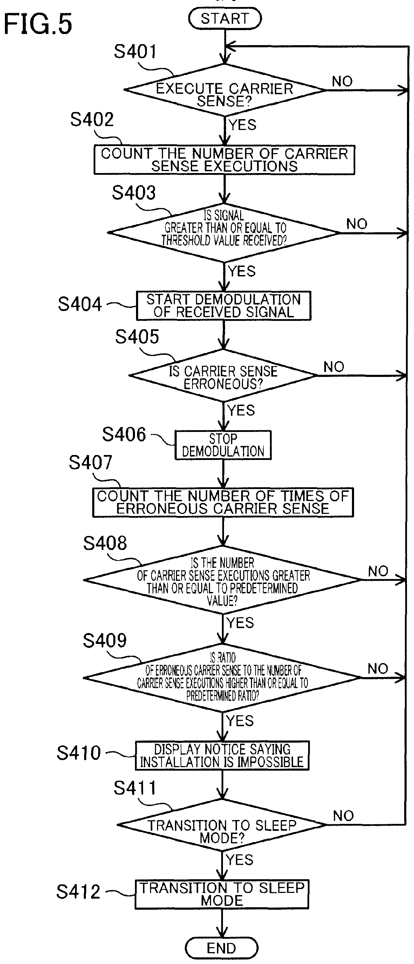

The notice saying that installation is impossible is an error indicator showing that the site where the wireless slave device 103 is temporarily installed is not appropriate for the installation. More specifically, the notice saying that installation is impossible is an indicator showing, for example, that there is noise having a level higher than or equal to a certain level at the temporary installation site. As a specific indication method, for example, when the display 13 is an LED lamp, the lamp may be set to light up in green in a normal state and light up in red to notify that the installation is impossible. A notice shown on the display 13 is not limited to the notice saying that installation is impossible as long as it indicates alert information. The method for indicating the information that installation is impossible is not limited to the method described above. The notice saying that installation is impossible is similarly used in FIGS. 4 and 5 which will be described later.

Although not shown in FIG. 3, the controller 12 determines whether or not the demodulated signal relating to the demodulation start at step S203 is a signal addressed to the wireless slave device 103 (performs a determination similar to the determination at step S103 of FIG. 1(b)) concurrently with the process at step S205. When the signal is addressed to wireless slave device 103 in the determination of whether or not the signal is addressed to wireless slave device 103, demodulated data is received similar to step S105 of FIG. 1(b). On the other hand, when the signal is not addressed to the wireless slave device 103, similar to step S104 of FIG. 1(b), the demodulation is stopped, and the flow goes back to the determination at step S201.

After the notice saying that installation is impossible is displayed at step S206, the controller 12 determines whether or not to transition to a sleep mode (step S207). When the controller 12 determines not to transition to the sleep mode ("NO" at step S207), the flow goes back to the determination at step S201. On the other hand, when the controller 12 determines to transition to the sleep mode ("YES" at step S207), the controller 12 transitions to the sleep mode (step S208) and terminates the process.

Note that whether or not to transition to the sleep mode may be determined based on a predetermined reference time such as, for example, whether or not a predetermined time has elapsed since the information that installation is impossible was displayed. Alternatively, a predetermined reference number of times may be set for the number of carrier sense executions, the number of times of erroneous carrier sense, etc. after the information that installation is impossible is displayed, and then the determination may be made based on the reference number of times. Alternatively, a predetermined reference ratio may be set for the ratio of the number of times of erroneous carrier sense to the number of carrier sense executions, and then the determination may be made based on the reference ratio. The determination of whether or not to transition to the sleep mode is similarly made in FIGS. 4 and 5 which will be described later.

The sleep mode in the embodiment may be an operation mode for reducing consumption of power of the power supply 15. Note that in the sleep mode, at least power supply from the power supply 15 to the transmitter/receiver 11 is preferably shut down. This is because, in the wireless communication device, the largest part of power is normally consumed by operation of the transmitter/receiver 11, and thus stopping at least the operation of the transmitter/receiver 11 can reduce the consumption of power of the power supply 15. Of course, operation of other components may be stopped.

### -Control Flow (2) of Carrier Sense-

FIG. 4 illustrates a control flow in the case where an abnormal situation in carrier sense is determined based on the number of times of erroneous carrier sense. In FIG. 4, step S301 through step S303 are control processes similar to those at step S201 through step S203 of FIG. 3, and thus detailed description thereof is omitted.

At step S304, it is determined whether or not carrier sense performed on a signal whose demodulation is started at step S303 is erroneous, that is, similar to step S103 of FIG. 1(b), whether or not the demodulated received signal is a signal addressed to the wireless slave device 103. Here, when the demodulated received signal is not a signal addressed to the wireless slave device 103, the controller 12 determines that the carrier sense is erroneous. When the controller 12 determines that the carrier sense is not erroneous ("NO" at step S304), the flow goes back to step S301 at which the execution of carrier sense is determined. When the controller 12 determines that the carrier sense is erroneous ("YES" at step S304), the demodulation is canceled (step S305). Moreover, the carrier sense counter 121 is controlled by the controller 12 to count (count up) the number of times of erroneous carrier sense (step S306). Note that both step S305 and step S306 may be simultaneously performed, or one of step S305 and S306 may be performed first.

Next, the erroneous carrier sense determiner 122 is controlled by the controller 12 to determine whether or not the number of times of erroneous carrier sense is greater than or equal to a predetermined number of times, that is, the reference value for determination (step S307). When the number of times of erroneous carrier sense is less than the reference value for determination ("NO" at step S307), the flow goes back to the determination at step S301. On the other hand, when the number of times of erroneous carrier sense is greater than or equal to the reference value for determination ("YES" at step S307), the erroneous carrier sense determiner 122 determines that an abnormal situation has occurred in the carrier sense. In this case, the display 13 is, similar to step S206 of FIG. 3, controlled by the controller 12 to display, for example, a notice saying that installation is impossible as alert information (step S308).

Here, the reference value for determination used at step S307 is determined based on, for example, the life of the internal battery of the power supply 15, the number of times that the carrier sense will be executed in a predetermined period, the number of times of or the ratio of erroneous carrier sense expected in the number of times that the carrier sense will be executed, etc. Specifically, for example, where 10-year period of use without changing the internal battery is assumed, for example, the number of times of or the ratio of the erroneous carrier sense for 10 years is approximately concerned, and a predetermined ratio or a predetermined number of times is added as a margin to the concerned number of times of the erroneous carrier sense, thereby obtaining the reference value for determination.

After the information that installation is impossible is displayed at step S308, the controller 12 determines whether or not to transition to a sleep mode (step S309). When the controller 12 determines not to transition to the sleep mode ("NO" at step S309), the flow goes back to the determination at step S301. On the other hand, when the controller 12 determines to transition to the sleep mode ("YES" at step S309), the controller 12 transitions to the sleep mode (step S310) and terminates the process.

### -Control Flow (3) of Carrier Sense-

FIG. 5 illustrates a control flow in the case where an abnormal situation in carrier sense is determined based on the ratio of the number of times of erroneous carrier sense to the number of carrier sense executions.

As illustrated in FIG. 5, first, the controller 12 determines whether or not to execute carrier sense (step S401). When the controller 12 determines not to execute the carrier sense ("NO" at step S401), the process at step S401 is repeated. On the other hand, when the controller 12 determines to execute the carrier sense ("YES" at step S401), the carrier sense counter 121 is controlled by the controller 12 to count (count up) the number of carrier sense executions (step S402). After the counting at step S402 is ended, the controller 12 determines at step S403, similar to step S102 of FIG. 1(b), whether or not a signal greater than or equal to the threshold value is received through the transmitter/receiver 11 via a communication channel preset between the wireless master device 101 (or the wireless repeater 102) and the wireless slave device 103. Thus, the number of carrier sense executions counted at step S402 is equal to the number of carrier sense control executions (the number of determinations at step S403).

The subsequent step S403 through step S407 are similar to step S302 through step S306 of FIG. 4, and thus detailed description thereof is omitted.

At step S407, similar to step S306, the number of times of erroneous carrier sense is counted, and then the erroneous carrier sense determiner 122 is controlled by the controller 12 to determine whether or not the number of carrier sense executions is greater than or equal to a predetermined reference value for determination (step S408). When the number of carrier sense executions is less than the reference value for determination ("NO" at step S408), the flow goes back to the determination at step S401. On the other hand, when the number of carrier sense executions is greater than or equal to the reference value for determination ("YES" at step S408), the erroneous carrier sense determiner 122 determines whether or not the ratio of the number of times of erroneous carrier sense to the number of carrier sense executions is higher than or equal to a predetermined reference ratio for determination (step S409). Note that step S408 is not necessarily required. A flow without step S408 may be possible. In this case, after step S407, the flow proceeds to step S409.

At step S409, when the ratio of the number of times of erroneous carrier sense to the number of carrier sense executions is lower than the reference ratio for determination ("NO" at step S409), the flow goes back to step S401. On the other hand, when the ratio of the number of times of erroneous carrier sense to the number of carrier sense executions is higher than or equal to the reference ratio for determination ("YES" at step S409), the erroneous carrier sense determiner 122 determines that an abnormal situation has occurred in the carrier sense. In this case, the display 13 is, similar to the step S308 of FIG. 4, controlled by the controller 12 to display, for example, a notice saying that installation is impossible as alert information (step S410).

Here, the reference value for determination used at step S408 is determined based on, for example, a period in which the occurrence of an abnormal situation in the carrier sense is to be determined. Specifically, for example, when whether or not the temporal installation site of the device is suitable for installation is determined at the time of the installation, a reference value for determination which the number of carrier sense executions reaches in, for example, several minutes to several tens of minutes is set. Alternatively, for example, after the installation site is once determined, a reference value for determination which the number of carrier sense executions reaches in, for example, several days to several months is set.

The reference ratio for determination used at step S409 is set based on the life of an internal battery of the power supply 15, the number of times that the carrier sense will be executed in a predetermined period, the number of times of erroneous carrier sense which is expected in the number of times that the carrier sense will be executed, etc. Specifically, for example, where a 10-year period of use without changing the internal battery is assumed, an acceptable number of times of or an acceptable ratio of erroneous carrier sense to the number of carrier sense executions for 10 years is approximately concerned, and the reference ratio for determination is determined based on the number of carrier sense executions, the acceptable number of times of or the acceptable ratio of the erroneous carrier sense, etc.

After the information that installation is impossible is displayed at step S410, the controller 12 determines whether or not to transition to a sleep mode (step S411). When the controller 12 determines not to transition to the sleep mode ("NO" at step S411), the flow goes back to the determination at step S401. On the other hand, when the controller 12 determines to transition to the sleep mode ("YES" at step S411), the controller 12 transitions to the sleep mode (step S412) and terminates the process.

In the determination at step S409 of FIG. 5, whether or not an abnormal situation has occurred in the carrier sense is determined based on the ratio of the number of times of erroneous carrier sense to the number of carrier sense executions (the number of times of step S402). However, for example, whether or not an abnormal situation has occurred in the carrier sense may be determined based on the ratio of the number of times of erroneous carrier sense to the number of starts of demodulation. In this case, the reference ratio for determination used at step S409 is determined based on the life of the internal battery of the power supply 15, the number of starts of demodulation in a predetermined period, the number of times of erroneous carrier sense, etc. Here, in step S408, the determination may be made based on the number of starts of demodulation instead of the number of carrier sense executions counted at step S402. Alternatively, for example, whether or not an abnormal situation has occurred in the carrier sense error may be determined based on the ratio of the number of starts of demodulation to the number of carrier sense executions (the number of times of step S402). For example, when a frequency of collection of data from the wireless master device 103 (e.g., once a month) has been known, it is possible to assume the number of starts of demodulation within the predetermined period. Thus, when the carrier sense is periodically executed at a frequency higher than the frequency of collection of data (e.g., approximately several times per minute), whether or not an abnormal situation has occurred in the carrier sense can be determined based on the ratio of the number of starts of demodulation to the number of carrier sense executions (the number of times of step S402).

Determining an abnormal situation in the carrier sense in each of FIGS. 3, 4, and 5 may be controlled at any timing. For example, the determining is preferably controlled when the wireless communication device transitions from an off state to an on state by operating the switch section 14. That is, when the switch section 14 is operated, the controller 12 allows the transmitter/receiver 11 to perform the carrier sense, and allows the erroneous carrier sense determiner 122 to determine whether or not the carrier sense is erroneous based on a count result of the carrier sense counter 121.

In FIGS. 3, 4 and 5, each of the number of carrier sense executions and the number of times of erroneous carrier sense is not limited to one value. For example, a plurality of execution modes such as an installation mode (e.g., a mode to determine whether or not a site in which the device is temporarily installed is suitable for installation) and a normal mode (a determination mode relating to normal operation after the installation site is determined) may be prepared as execution modes, and the number of carrier sense executions and the number of times of erroneous carrier sense may be assigned to each of the execution modes. Note that the execution modes are not limited to those described above. For example, a special mode for when a special event occurs may be prepared. Moreover, the number of the execution modes is not limited to two, and the controller 12 may have three or more execution modes.

### -The Case Where Controller Has a Plurality of Execution Modes-

The case where the controller 12 has the plurality of execution modes will be more specifically described with reference to FIG. 5. Note that the controller 12 of the present embodiment has two modes as the execution modes, and the two modes are the installation mode and the normal mode described above. Moreover, when the switch section 14 is operated, the controller 12 allows the transmitter/receiver 11 to start carrier sense. That is, when the switch section 14 is operated, the control (flow) illustrated in FIG. 5 starts. Moreover, the number of carrier sense executions is greater in the normal mode than in the installation mode. Specifically, in the present embodiment, the number of carrier sense executions in the normal mode is set to a value (second threshold value) 10,000 times as large as a value (first threshold value) in the installation mode. Moreover, the installation mode and the normal mode have different values of the reference ratio for determination of the number of times of erroneous carrier sense to the number of carrier sense executions. Note that the number of the execution modes is not limited to two, but may be three or more. Moreover, the magnification of the number of carrier sense executions in the normal mode compared to that in the installation mode is not limited to 10,000 but may be greater than or equal to 10,000 or may be less than or equal to 10,000. Alternatively, the two modes may have the same reference ratio for determination.

First, for temporary installation, the installation mode is set. Specifically, the installation mode is externally set in the switch section 14. When the installation mode is set in the switch section 14, a reference value used to determine the number of carrier sense executions (step S408 in FIG. 5) is changed to a value corresponding to the installation mode. Similarly, the reference ratio for determination used for the determination in step S409 of FIG. 5 is changed to a value corresponding to the installation mode.

In this state, the controller 12 starts controlling the carrier sense in FIG. 5. Specifically, the controller 12 determines whether or not to execute the carrier sense at step S401. The subsequent steps in the control (flow) are the same as or similar to step S401 through step S412 described above, and thus detailed description thereof is omitted.

Here, when the reference value for determination reaches the value corresponding to the installation mode ("YES" at step S408), and step S409 results in "YES," the notice saying that installation is impossible is displayed (step S410). On the other hand, when the reference value for determination reaches the value corresponding to the installation mode ("YES" at step S408), and step S409 results in "NO," the notice saying that installation is impossible is not displayed, and the processes at step S401 through step S409 are continued.

Time from the start of controlling the carrier sense until the reference value for determination reaches the value corresponding to the installation mode (hereinafter referred to as set time) can be set by changing the reference value for determination. Therefore, for example, the set time in the installation mode is set to several minutes to several ten minutes, and the display 13 is checked after several minutes to several ten minutes have elapsed since the switch was operated, so that it is possible to check whether or not the installation is possible. Thus, the quality of the condition of the communication environment can be determined in a short period of time. If, for example, the notice saying that installation is impossible is displayed, the temporary installation site is changed, the installation mode is then set in the switch section 14 again, and thereafter, the carrier sense of FIG. 5 according to the installation mode may be controlled.

Next, if the notice saying that installation is impossible is not displayed after several minutes to several ten minutes have elapsed since the installation mode was set in the switch section 14, the normal mode is set. Specifically, the normal mode is externally set in the switch section 14. When the normal mode is set in the switch section 14, the reference value for determination used to determine the number of carrier sense executions (step S408 of FIG. 5) is changed to a value corresponding to the normal mode. Similarly, the reference ratio for determination used for the determination at step S409 of FIG. 5 is changed to a value corresponding to the normal mode. In the present embodiment, the reference value for determination is set to a value 10,000 times as large as the value in the installation mode, and the reference ratio for determination is changed to a value corresponding to a normal mode.

In this state, the controller 12 starts the flow illustrated in FIG. 5. Specifically, in a manner similar to that in the installation mode, the controller 12 determines whether or not to execute the carrier sense at step S401. The subsequent step S401 through step S412 are the same as or similar to those in the installation mode except that the reference value for determination and the reference ratio for determination are different from those in the installation mode. Thus, detailed description of step S402 through step S412 is omitted.

Here, for example, when the set time in the normal mode is set to several days to several months, it is possible to check the occurrence of an abnormal situation in the carrier sense by checking the display 13, for example, at the time of regular check or meter reading performed, for example, in every month. Thus, it is possible to regularly check whether or not an abnormal situation unrecognizable in the installation mode has occurred in the carrier sense. Examples of the abnormal situation unrecognizable in the installation mode include an abnormal situation in the carrier sense due to a later caused event and an abnormal situation in the carrier sense due to the quality of the condition of the communication environment during a time period except for the time in which measurement was performed in the installation mode. If, for example, the notice saying that installation is impossible is displayed, the installation site is changed, the installation mode is then set to the switch section 14 again in the new installation site, and thereafter, the processes from the carrier sense of FIG. 5 according to the installation mode may be performed. Note that after the installation site has been changed, the processes according to the normal mode may be performed again without using the installation mode, or another execution mode may be performed. In this way, it is possible to determine the quality of the condition of the communication environment before the communication is no longer possible due to consumption of the internal battery.

Note that the control of the carrier sense in the plurality of execution modes is applicable to FIGS. 3 and 4. Specifically, in FIG. 3, when the controller 12 has two execution modes, reference values used to determine the number of starts of demodulation (step S205) are changed to values corresponding to the execution modes (e.g., a first threshold value and a second threshold value). In each of the execution modes, the carrier sense illustrated at step S201 through step S208 of FIG. 3 is controlled. Similarly, in FIG. 4, when two execution modes are prepared, reference values used to determine the number of times of erroneous carrier sense (step S307) are changed to values corresponding to the execution modes (e.g., a first threshold value and a second threshold value). In each of the execution modes, the carrier sense at step S301 through step S310 of FIG. 4 is controlled.

As described above, according to the present embodiment, the installation of the wireless communication device or the operation of the switch section 14 can be used as a trigger to check the environment of the wireless communication (e.g., the presence of noise). Thus, it is possible to determine the quality of the condition of the communication environment at the time of installation. Therefore, it is possible to avoid unnecessary labor such as installation of the wireless communication device in an environment with a lot of noise and to prevent unexpected shortening of the product life of the wireless communication device. Moreover, it is possible to avoid that the wireless communication device whose installation has once decided is relocated to another site.

Moreover, providing a plurality of execution modes allows controlling of the carrier sense at the time of installation and controlling a period in which an abnormal situation in carrier sense is determined in a normal operation. Thus, an abnormal situation in the carrier sense can be checked in a short period of time at the time of installation, and in the normal operation after the installation is determined, it is possible to determine the abnormal situation in the carrier sense in a period longer than that at the time of installation. Thus, it is possible to increase the work efficiency at the time of installation, and to avoid displaying the notice saying that installation is impossible due to generated errors concentrated on a short period of time in the normal operation. Thus, it is possible to determine an abnormal situation in the carrier sense with a long-term perspective in the normal operation.

Note that in the flows of FIGS. 3, 4, and 5, the control relating to the transition to the sleep mode may be omitted. Specifically, steps S207 and S208 of FIG. 3, steps S308 and S309 of FIG. 4, and steps S411 and S412 of FIG. 5 may be omitted. In this case, the process is terminated after the notice saying that installation is impossible is displayed in the control illustrated in each figure. In this case, the process may be terminated at that point of the flow (the control of the carrier sense may be stopped), or the flow may be set to go back to the determination of whether or not to execute the carrier sense in each of the figures (step S201 of FIG. 3, step S301 of FIG. 4, and step S401 of FIG. 5).

In step S306 of FIG. 4 and step S407 of FIG. 5, the number of determinations that the demodulated received signal is not a signal addressed to the wireless slave device 103 is counted as the number of times of erroneous carrier sense, but the invention is not limited to this embodiment. For example, the number of times that the demodulation is interrupted may be counted as the number of times of erroneous carrier sense.

In the above-described flows of FIGS. 3, 4, and 5, the number of carrier sense executions and the number of times of erroneous carrier sense are each a total number of executions and times counted. However, for example, based on the external operation via the switch section 14, each of the number of carrier sense executions and the number of times of erroneous carrier sense may be reset. Alternatively, for example, when an internal battery is put in or taken out of the power supply 15, each of the numbers of times may be reset. Alternatively, for example, a value stored in the memory 124 in advance or a value based on the external operation via the switch section 14 may be used as each of the number of carrier sense executions and the number of times of erroneous carrier sense.

Alternatively, the number of carrier sense executions, and the reference value and the reference ratio to determine the number of times of erroneous carrier sense may be preset values, or can be externally set via the switch section 14. Moreover, any of a plurality of values stored in the memory 124 in advance may be selected based on the external operation via the switch section 14.

The present invention is not limited to the description of the embodiments described, but various modifications may be made within the scope of the claims.

### INDUSTRIAL APPLICABILITY

The present invention can be preferably used in the field of wireless communication devices which require carrier sense.

### DESCRIPTION OF REFERENCE CHARACTERS

- 11: Transmitter/Receiver
- 13: Display
- 14: Switch (Operation section)
- 15: Power Supply
- 20: Gas Meter (External Device)
- 101: Wireless Master Device
- 102: Wireless Repeater (Wireless Communication Device)
- 103: Wireless Slave Device (Wireless Communication Device)
- 121: Carrier Sense Counter (Counter)
- 122: Erroneous Carrier Sense Determiner (Determiner)

## Claims

1. A wireless communication device (102, 103) comprising:
a transmitter/receiver (11) configured to perform wireless communication including carrier sense;
a determiner (122),
a controller (12), and
a power supply (15) including an internal battery, and configured to supply power to the wireless communication device (102, 103), wherein
a sleep mode is provided for the wireless communication device (102, 103),and the controller (12) is further configured to reduce, in the sleep mode, consumption of power of the power supply (15), and to shut down at least power supply from the power supply (15) to the transmitter/receiver (11);
**characterized by**
a counter (121) configured to count the number of carrier sense executions, and the number of times of erroneous carrier sense in which in the carrier sense, a demodulated signal obtained by demodulation of a received signal received via the transmitter/receiver is determined not to be a signal addressed to the wireless communication device (102, 103), wherein
when a ratio of the number of times of the erroneous carrier sense to the number of carrier sense executions is lower than a predetermined reference ratio for determination, the determiner (122) determines that an abnormal situation caused by noise has not occurred in the carrier sense, whereas
when the ratio of the number of times of the erroneous carrier sense to the number of carrier sense executions is higher than or equal to the predetermined reference ratio for determination, the determiner (122) determines that the abnormal situation caused by noise has occurred in the carrier sense,
wherein the controller (12) is configured to transition to the sleep mode when the determiner determines that an abnormal situation caused by noise has occurred in the carrier sense; and
a display (13) configured to display alert information when the determiner (122) determines that the abnormal situation caused by noise has occurred in the carrier sense, wherein
the determination by the determiner (122) is executed when the number of carrier sense executions is greater than or equal to a reference value for determination.

2. The wireless communication device (102, 103) of claim 1, wherein the counter (121) is further configured to count, as the number of carrier sense executions, the number of determinations of whether or not a signal greater than or equal to a threshold value is received via the transmitter/receiver (11).

3. The wireless communication device (102, 103) of claim 1, wherein the counter (121) is further configured to count the number of starts of the demodulation as the number of carrier sense executions.

4. The wireless communication device (102, 103) of claim 1, wherein
a plurality of execution modes different from each other in the reference value for determination are provided, wherein the plurality of execution modes includes an installation mode and a normal mode, the reference value for determination being larger in the normal mode than in the installation mode.

5. The wireless communication device (102, 103) of claim 4, further comprising:
an operation section (14) via which an input operation is externally performed,
wherein the wireless communication device (102, 103) selects any of the execution modes based on the input operation performed via the operation section, and operates in the selected execution mode.

6. The wireless communication device (102, 103) of any one of claims 1-5, further comprising:
an operation section (14) via which an external input operation is externally performed, wherein
the carrier sense is started based on the input operation.

7. The wireless communication device (102, 103) of any one of claims 1-6, which is
a wireless terminal (103) configured to acquire data stored in an external device and send the data to a wireless master device (101) configured to collect the data, or
a wireless repeater (102) configured to relay communication between the wireless terminal (103) and the wireless master device (101).

## Patentansprüche

1. Drahtlose Kommunikationsvorrichtung (102, 103), umfassend:
einen Sender/Empfänger (11), der konfiguriert ist zum Durchführen einer drahtlosen Kommunikation einschließlich einer Trägererfassung,
eine Bestimmungseinrichtung (122),
eine Steuereinrichtung (12), und
eine Stromversorgung (15), die eine interne Batterie umfasst und konfiguriert ist zum Zuführen von Strom zu der drahtlosen Kommunikationsvorrichtung (102, 103),
wobei ein Ruhemodus für die drahtlose Kommunikationsvorrichtung (102, 103) vorgesehen ist, und
wobei die Steuereinrichtung (12) weiterhin konfiguriert ist zum Reduzieren, in dem Ruhemodus, des Stromverbrauchs der Stromversorgung (15) und zum Herunterfahren wenigstens der Stromversorgung von der Stromversorgung (15) zu dem Sender/Empfänger (11),
**gekennzeichnet durch**
einen Zähler (121), der konfiguriert ist zum Zählen der Anzahl der Trägererfassungsausführungen und der Anzahl von falschen Trägererfassungen, in denen in der Trägererfassung bestimmt wird, dass ein durch eine Demodulation eines über den Sender/Empfänger empfangenen Signals erhaltenes demoduliertes Signal kein zu der drahtlosen Kommunikationseinrichtung (102, 103) adressiertes Signal ist,
wobei, wenn das Verhältnis der Anzahl von falschen Trägererfassungen zu der Anzahl von Trägererfassungsausführungen niedriger als ein vorbestimmtes Bezugsverhältnis für eine Bestimmung ist, die Bestimmungseinrichtung (122) bestimmt, dass keine durch Rauschen verursachte anormale Situation in der Trägererfassung aufgetreten ist,
wobei, wenn das Verhältnis der Anzahl von falschen Trägererfassungen zu der Anzahl von Trägererfassungsausführungen höher oder gleich dem vorbestimmten Bezugsverhältnis für eine Bestimmung ist, die Bestimmungseinrichtung (122) bestimmt, dass eine durch Rauschen verursachte anormale Situation in der Trägererfassung aufgetreten ist, wobei die Steuereinrichtung (12) konfiguriert ist zum Übergehen zu dem Ruhemodus, wenn die Bestimmungseinrichtung bestimmt, dass eine durch Rauschen verursachte anormale Situation in der Trägererfassung aufgetreten ist, und
eine Anzeige (13), die konfiguriert ist zum Anzeigen von Warninformationen, wenn die Bestimmungseinrichtung (122) bestimmt, dass eine durch Rauschen verursachte anormale Situation in der Trägererfassung aufgetreten ist,
wobei die Bestimmung durch die Bestimmungseinrichtung (122) ausgeführt wird, wenn die Anzahl von Trägererfassungsausführungen größer oder gleich einem Bezugswert für eine Bestimmung ist.

2. Drahtlose Kommunikationsvorrichtung (102, 103) nach Anspruch 1, wobei der Zähler (121) weiterhin konfiguriert ist zum Zählen, als der Anzahl von Trägererfassungsausführungen, der Anzahl von Bestimmungen, ob ein Signal größer oder gleich einem Schwellwert über den Sender/Empfänger (11) empfangen wird oder nicht.

3. Drahtlose Kommunikationsvorrichtung (102, 103) nach Anspruch 1, wobei der Zähler (121) weiterhin konfiguriert ist zum Zählen der Anzahl von Starts der Demodulation als der Anzahl von Trägererfassungsausführungen.

4. Drahtlose Kommunikationsvorrichtung (102, 103) nach Anspruch 1, wobei eine Vielzahl von Ausführungsmodi, die sich durch den Bezugswert für eine Bestimmung unterscheiden, vorgesehen sind und die Vielzahl von Ausführungsmodi einen Installationsmodus und einen normalen Modus umfasst, wobei der Bezugswert für eine Bestimmung in dem normalen Modus größer ist als in dem Installationsmodus.

5. Drahtlose Kommunikationsvorrichtung (102, 103) nach Anspruch 4, die weiterhin umfasst:
einen Betätigungsabschnitt (14), über den eine Eingabebetätigung extern durchgeführt wird,
wobei die drahtlose Kommunikationsvorrichtung (102, 103) einen der Ausführungsmodi basierend auf der über den Betätigungsabschnitt durchgeführten Eingabebetätigung auswählt und in dem ausgewählten Ausführungsmodus betrieben wird.

6. Drahtlose Kommunikationsvorrichtung (102, 103) nach einem der Ansprüche 1 bis 5, die weiterhin umfasst:
einen Betätigungsabschnitt (14), über den eine externe Eingabebetätigung extern durchgeführt wird,
wobei die Trägererfassung basierend auf der Eingabebetätigung gestartet wird.

7. Drahtlose Kommunikationsvorrichtung (102, 103) nach einem der Ansprüche 1 bis 6, die ist:
ein drahtloses Endgerät (103), das konfiguriert ist zum Erhalten von in einer externen Vorrichtung gespeicherten Daten und zum Senden der Daten an ein drahtloses Master-Gerät (101), das konfiguriert ist zum Sammeln der Daten, oder
ein drahtloser Repeater (102), der konfiguriert ist zum Weiterleiten einer Kommunikation zwischen dem drahtlosen Endgerät (103) und dem drahtlosen Master-Gerät (101).

## Revendications

1. Dispositif de communication sans fil (102, 103) comprenant :
un émetteur récepteur (11) configuré pour effectuer une communication sans fil incluant une détection de porteuse,
un dispositif de détermination (122),
un contrôleur (12), et
une alimentation (15) incluant une batterie interne et configurée pour fournir de l'énergie au dispositif de communication sans fil (102, 103), dans lequel
un mode de repos est prévu pour le dispositif de communication sans fil (102, 103), et
le contrôleur (12) est en outre configuré pour réduire, dans le mode de repos, la consommation d'énergie de l'alimentation (15) et pour couper au moins la fourniture d'énergie de l'alimentation (15) à l'émetteur récepteur (11),
**caractérisé par**
un compteur (121) configuré pour compter le nombre d'exécutions de détection de porteuse et le nombre de fois où s'est produite une détection erronée de porteuse dans laquelle, lors de la détection de porteuse, il est déterminé qu'un signal démodulé obtenu par la démodulation d'un signal reçu par l'intermédiaire de l'émetteur récepteur n'est pas un signal adressé au dispositif de communication sans fil (102, 103), dans lequel
lorsque le rapport du nombre de fois avec une détection erronée de porteuse sur le nombre d'exécutions de détection de porteuse est inférieur à un rapport de référence prédéterminé pour la détermination, le dispositif de détermination (122) définit qu'aucune situation anormale provoquée par du bruit ne s'est produite lors de la détection de porteuse, alors que
lorsque le rapport du nombre de fois avec une détection erronée de porteuse sur le nombre d'exécutions de détection de porteuse est supérieur ou égal au rapport de référence prédéterminé pour la détermination, le dispositif de détermination (122) définit qu'il s'est produit une situation anormale provoquée par du bruit lors de la détection de porteuse,
dans lequel le contrôleur (12) est configuré pour effectuer une transition vers le mode de repos lorsque le dispositif de détermination à défini qu'il s'est produit une situation anormale provoquée par du bruit lors de la détection de porteuse, et
un afficheur (13) configuré pour afficher des informations d'alerte lorsque le dispositif de détermination (122) à défini qu'il s'est produit une situation anormale provoquée par du bruit lors de la détection de porteuse, dans lequel
la détermination effectuée par le dispositif de détermination (122) est exécutée lorsque le nombre d'exécutions de détection de porteuse est supérieur ou égal à une valeur de référence en vue de la détermination.

2. Dispositif de communication sans fil (102, 103) selon la revendication 1, dans lequel le compteur (121) est en outre configuré pour compter, comme nombre d'exécutions de détection de porteuse, le nombre de déterminations de ce qu'un signal supérieur ou égal à une valeur de seuil a été ou non reçu par l'intermédiaire de l'émetteur récepteur (11).

3. Dispositif de communication sans fil (102, 103) selon la revendication 1, dans lequel le compteur (121) est en outre configuré pour compter le nombre de démarrages de la démodulation comme nombre d'exécutions de détection de porteuse.

4. Dispositif de communication sans fil (102, 103) selon la revendication 1, dans lequel :
une pluralité de modes d'exécution, différents les uns des autres en ce qui concerne la valeur de référence pour la détermination, sont prévus, la pluralité de modes d'exécution incluant un mode d'installation et un mode normal, la valeur de référence pour la détermination étant plus grande dans le mode normal que dans le mode d'installation.

5. Dispositif de communication sans fil (102, 103) selon la revendication 4, comprenant en outre :
une section fonctionnelle (14) par l'intermédiaire de laquelle une opération d'entrée est effectuée de manière externe,
où le dispositif de communication sans fil (102, 103) sélectionne l'un quelconque des modes d'exécution sur la base de l'opération d'entrée effectuée par l'intermédiaire de la section fonctionnelle, et fonctionne dans le mode d'exécution sélectionné.

6. Dispositif de communication sans fil (102, 103) selon l'une quelconque des revendications 1 à 5, comprenant en outre :
une section fonctionnelle (14) par l'intermédiaire de laquelle une opération d'entrée est effectuée de manière externe, où
la détection de porteuse est démarrée sur la base de l'opération d'entrée.

7. Dispositif de communication sans fil (102, 103) selon l'une quelconque des revendications 1 à 6, lequel est :
un terminal sans fil (103) configuré pour acquérir des données stockées dans un dispositif extérieur et pour envoyer les données à un dispositif maître sans fil (101) configuré pour recueillir les données, ou
un répéteur sans fil (102) configuré pour relayer une communication entre le terminal sans fil (103) et le dispositif maître sans fil (101).
